# EUROPÄISCHE PATENTSCHRIFT

(11) **EP 0 524 994 B1**
(45) Veröffentlichungstag und Bekanntmachung des Hinweises auf die Patenterteilung: **30.11.1994**
(21) Anmeldenummer: 91907441.9
(22) Anmeldetag: 18.04.1991
(51) Int. Cl.: H04L 12/26, H04L 1/24

(54) **VERFAHREN ZUM ERMITTELN VON QUALITÄTSPARAMETERN EINER ÜBERTRAGUNGSSTRECKE FÜR DIGITALE DATENSTRÖME MIT ZELLENSTRUKTUR**
PROCESS FOR DETERMINING QUALITY PARAMETERS IN A TRANSMISSION PATH FOR DIGITAL-DATA STREAMS WITH A CELLULAR STRUCTURE
PROCEDE POUR LE CALCUL DE PARAMETRES DE QUALITE D'UNE LIGNE DE TRANSMISSION POUR DES FLUX DE DONNEES NUMERIQUES A STRUCTURE CELLULAIRE

(30) Priorität: 19.04.1990 DE 4012850; 03.05.1990 DE 4014766
(43) Veröffentlichungstag der Anmeldung: 03.02.1993
(73) Patentinhaber: SIEMENS AKTIENGESELLSCHAFT, 80333 München (DE)
(72) Erfinder: WOLF, Andreas, D-1000 Berlin 41 (DE)
(86) Internationale Anmeldenummer: DE9100323
(87) Internationale Veröffentlichungsnummer: WO9116777

(56) Entgegenhaltungen:
- US-A- 4 441 192
- US-A- 4 486 877

## Beschreibung

Die Erfindung betrifft ein Verfahren zum Ermitteln von Qualitätsparametern einer Übertragungsstrecke für digitale Datenströme mit Zellenstruktur, wobei jede Zelle ein frei mit Daten belegbares Nutzfeld aufweist, bei dem ein Meßsignal auf die Übertragungsstrecke gegeben und nach Durchlaufen der Übertragungsstrecke ausgewertet wird.

Übertragungsstrecken für digitale Datenströme weisen neben physikalischen Übertragungsleitungen weitere Bestandteile, wie beispielsweise Vermittlungseinrichtungen, genormte Anschlußstellen, Adapter für die Anschlußstellen sowie Endgeräte (z.B. Telefone oder Fax-Geräte) auf. Über die Übertragungsstrecken bei digitalen Kommunikationssystemen werden in hoher Geschwindigkeit in organisierter Form digitale Datenströme geleitet. Zur Beurteilung eines digitalen Kommunikationssystems ist es wesentlich, Qualitätsparameter einer derartigen Übertragungsstrecke zu kennen. Als Qualitätskriterien gilt beispielsweise, ob Teile des Datenstromes auf der Übertragungsstrecke verlorengegangen sind, welche Laufzeit die Daten auf der Übertragungsstrecke benötigt haben, ob die Reihenfolge der Daten erhalten geblieben ist und ob einzelne Binärdaten (Bits) fehlerhaft übertragen wurden.

Aus der Kommunikationstechnik ist bekannt, Übertragungsstrecken dadurch zu testen, daß eingangsseitig ein Meßsignal (Testsignal) eingegeben wird und daß das Meßsignal nach Durchlaufen der Übertragungsstrecke ausgewertet wird.

Bei einem aus der US-PS 4,441,192 bekannten Verfahren wird dazu eine Übertragungsstrecke eingangsseitig mit einem Testsignal mit einer ausgeprägten, spitzen Autokorrelationsfunktion beaufschlagt. Der zu untersuchenden Übertragungsstrecke ist ausgangsseitig eine Kompensationsschaltung nachgeordnet, die nach entsprechender Einstellung zur Kompensation von Verzerrungen oder Störungen von übertragenen Datensignalen infolge der übertragungsstreckeneigenen Übertragungscharakteristik dient. Bei dem bekannten Verfahren wird zur Einstellung der Kompensationsschaltung die Impulsantwort der zu untersuchenden Übertragungsstrecke aus der Kreuzkorrelation des Testsignals und des Ausgangssignals ermittelt. Damit kann die nachgeordnete Kompensationsschaltung auch bei Übertragungsstrecken mit unbekannter oder zeitvarianter Übertragungscharakteristik optimal eingestellt werden, so daß ausgangsseitig ein weitgehend unverzerrtes Datensignal erhalten wird.

Grundsätzlich kann das Testsignal vorzugsweise in Leerbereiche eines betriebsmäßig zu übertragenden digitalen Datenstromes eingeschleust werden. Dabei ist jedoch eine zuverlässige Erkennung des in den digitalen Datenstrom eingeschleusten Testsignals erforderlich.

Erfindungsgemäß ist bei einem Verfahren der eingangs genannten Art vorgesehen, daß
- als Meßsignal eine Folge von Testzellen verwendet wird, deren Nutzfelder jeweils teilweise mit einem aus einer Anzahl von Binärdaten (Bits) bestehenden Testmuster belegt sind, wobei die Auto-Korrelationsfunktion des Testmusters annähernd einem Dirac-Impuls entspricht und wobei innerhalb der Folge der Testzellen die Lage des Testmusters in den Nutzfeldern der Testzellen wiederholungsfrei variiert ist,
- daß jede Zelle des Datenstroms nach Durchlaufen der Übertragungsstrecke mit einem mit dem Testmuster identischen oder zu dem Testmuster inversen Referenzmuster korreliert wird
- und daß das Maximum der erhaltenen Kreuzkorrelationsfunktion bezüglich seiner Lage in bezug auf den Anfang der jeweiligen Zelle und bezüglich seiner Höhe ausgewertet wird.

Unter Dirac-Impuls ist ein theoretischer Impuls mit einer unendlich hohen Amplitude und einer unendlich geringen Dauer mit der Fläche 1 zu verstehen (vgl. z. B. Otto Mildenberger "Grundlagen der Systemtheorie für Nachrichtentechniker", Hansa-Verlag, 1981, Seiten 48 bis 50). Ein Vorteil des erfindungsgemäßen Verfahrens ist, daß eine Testzelle als solche in einem betriebsmäßigen digitalen Datenstrom erkannt werden kann, ohne daß es zusätzlicher Daten - die in dem Datenstrom mitzutransportieren wären - bedarf. Auf diese Weise ist - je nach Aufbau der Zellen - im besten Fall die gesamte Zelle überprüfbar, weil für derartige, das Testmuster kennzeichnende Daten keine reservierten Zellenplätze erforderlich sind. Durch die Auswertung des Maximums der erhaltenen Kreuzkorrelationsfunktion bezüglich seiner Höhe können ferner Bitfehler bei der Übertragung festgestellt werden. In einem verhältnismäßig weiten Bereich besteht nämlich ein umgekehrt proportionaler linearer Zusammenhang zwischen der Höhe des Maximums und der Anzahl der Bitfehler. Je nach Schwellwert für die Höhe des Maximums sind somit auch Testmuster erkennbar, die einen oder mehrere Bitfehler aufweisen. Allerdings wächst damit die Gefahr - sofern der digitale Datenstrom auch betriebsgemäß übertragene Zellen aufweist -, daß eine korrekt übertragene betriebsgemäße Zelle in ihrem Nutzfeld ein dem Testmuster bzw. dem durch Bitfehler verfälschten Testmuster entsprechendes Datenmuster enthält. Diese Gefahr kann durch zunehmende Länge der Testmuster jedoch erheblich minimiert werden. Durch Auswertung der Lage des Maximums in bezug auf den Anfang der ausgewerteten Zelle läßt sich zudem die Nummer der Testzelle ermitteln, ohne daß dafür zusätzlich zu übertragene - und daher nicht prüfbare und das Nutzfeld verringernde - Daten für die Nummer der Testzelle erforderlich sind. Durch das jeweils in bezug auf den Testzellenanfang verschobene Testmuster sind systematische Fehler in vorteilhafter Weise zusätzlich erkennbar; wenn sämtliche Variationen der Testmuster in den Nutzfeldern der Testzellen zusammengenommen das gesamte Nutzfeld der Testzelle bedecken, wird jeder Platz in dem Nutzfeld mindestens einmal mit einem Binärdatum des Testmusters belegt.

Weitere vorteilhafte Fortbildungen des erfindungsgemäßen Verfahrens sind in den Unteransprüchen enthalten.

Soll eine besonders hohe Anzahl von Testzellen verwendet werden, so wird erfindungsgemäß das Meßsignal durch weitere Testzellen ergänzt, deren Nutzfelder jeweils teilweise mit einem zu dem Testmuster inversen Testmuster belegt sind. Damit wird die ohne zusätzliche Daten erkennbare Anzahl von Testzellen verdoppelt. Ist eine noch weitere Erhöhung der Anzahl von Testzellen erwünscht, so kann diese durch Verwendung einer zusätzlichen Sequenz- Nummer erfolgen, die in dem Nutzfeld binär eingeschrieben ist. Diese Sequenz-Nummer sollte vorzugsweise eine Exponentenfunktion haben. Darunter ist zu verstehen, daß nach Erreichen einer bestimmten Anzahl (beispielsweise 100) von Testzellen, deren Nummer durch die Kreuzkorrelation erkennbar ist, der Exponent gesetzt wird und die Variation der Testzellen wieder von vorne beginnt. Damit wäre im Beispiel die Anzahl der Testzellen auf 200 erhöht.

Um das erfindungsgemäße Verfahren mit einem Meßsignal mit einer sehr hohen Anzahl unterschiedlicher Testzellen durchgeführen zu können, werden gemäß einer Weiterbildung des erfindungsgemäßen Verfahrens
- die Testzellen außer dem jeweils in einem Teil ihrer Nutzfelder vorgesehenen Testmuster in einem weiteren Teil ihrer Nutzfelder mit einem aus einer Anzahl von Binärdaten (Bits) bestehenden weiteren Testmuster belegt, wobei die Autokorrelation des weiteren Testmusters annähernd einem Dirac-Impuls entspricht,
- wird innerhalb der Folge der Testzellen die Lage des weiteren Testmusters im weiteren Teil der Nutzfelder der Testzellen verändert, wenn die wiederholungsfreie Variation der Lage des einen Testmusters in dem einen Teil der Nutzfelder in der Folge der Teststellen erschöpft ist,
- wird jede Zelle des Datenstroms nach Durchlaufen der Übertragungsstrecke mit einem mit dem weiteren Testmuster identischen oder zu dem weiteren Testmuster inversen Referenzmuster korreliert, und
- wird das Maximum der erhaltenden Kreuzkorrelationsfunktion bezüglich seiner Lage in Bezug auf den Anfang der jeweiligen Zelle und bezüglich seiner Höhe ausgewertet.

Der wesentliche Vorteil dieser Ausführungsform des erfindungsgemäßen Verfahrens besteht darin, daß mit einem Meßsignal mit einer sehr hohen Anzahl unterschiedlicher Testzellen gearbeitet werden kann, ohne daß zur Kennzeichnung der jeweiligen Testzelle eine Nummer für sich in den Kopf oder in das Nutzfeld der jeweiligen Testzelle eingeschrieben werden muß. Dabei ist die gleichzeitige Erkennung von Bitfehlern durch die Auswertung des Maximums der erhaltenden Kreuzkorrelationsfunktion nach wie vor möglich.

Damit durch das weitere Testmuster die Zahl der im Meßsignal verwendeten Testzellen nach einer Exponentialfunktion erhöht werden kann, ist bei einer weiteren vorteilhaften Ausgestaltung des erfindungsgemäßen Verfahrens die Lage des weiteren Testmusters nach jeweils einer Erschöpfung der wiederholungsfreien Variation der Lage des einen Testmusters in dem einen Teil der Nutzfelder in der Folge der Testzellen um jeweils einen gleichen Abstand wiederholungsfrei variiert. Ist also eine bestimmte Anzahl von Testzellen durch erschöpfende wiederholungsfreie Veränderung der Lage des einen Testmusters in dem einen Teil der Nutzfelder in der Folge der Testzellen erreicht, dann läßt sich durch Änderung der Lage des weiteren Testmusters eine gleich große Anzahl von Testzellen durch wiederum wiederholungsfreie Variation der Lage des einen Testmusters in dem einen Teil der Nutzfelder erzielen. Eine weitere Verdopplung des Umfangs der zur Verfügung stehenden Anzahl unterschiedlicher Testzellen läßt sich in vorteilhafter Weise dadurch erreichen, daß das Meßsignal durch weitere Testzellen ergänzt wird, die in dem weiteren Teil ihrer Nutzfelder jeweils mit einem zu dem weiteren Testmuster inversen Testmuster belegt sind.

Die Erfindung wird im folgenden anhand ihrer Anwendung bei einem Breitband-Kommunikationssystem (D-ISDN) anhand einer Zeichnung erläutert. Es zeigen
- Figur 1: zur Verdeutlichung der Unterschiede zwischen dem Asynchronen TransferModus und dem Synchronen TransferModus das zeitliche Auftreten bestimmter Zellen bestimmter Datenströme;
- Figur 2: schematisch eine Anordnung zur Durchführung des erfindungsgemäßen Verfahrens;
- Figur 3: eine mögliche Struktur einer Zelle eines digitalen Datenstroms;
- Figur 4: eine Testzellenstruktur;
- Figur 5: die Verschiebung eines Testmusters in dem verfügbaren Nutzfeld in Abhängigkeit von der Testzellennummer;
- Figur 6: schematisch die Auswertung der Kreuzkorrelationsfunktion;
- Figur 7: den Aufbau des in der Figur 2 gezeigten ATM Analysators,
- Figur 8: die Verhältnisse bei Verwendung weiterer Testzellen, deren Nutzfelder jeweils teilweise mit einem zu dem Testmuster inversen Testmuster belegt sind,
- Figur 9: verschiedene Testzellen eines Meßsignals mit unterschiedlich verschobenen Testmustern sowie unterschiedlich verschobenen weiteren Testmustern und
- Figur 10: ein Ausführungsbeispiel eines Analysators dazu.

Das erfindungsgemäße Verfahren ist insbesondere bei dem sogenannten Asynchronen Übertragungsmodus (Asynchronous Transfer Mode, ATM) für das Breitband-ISDN Verfahren anwendbar. Die ATM-Technik scheint eine Universallösung für die Übertragung unterschiedlicher Dienste mit einem breiten Spektrum von Bitraten zu sein.

Durch die immer höheren Anforderungen an die Kommunikationsnetze durch die unterschiedlichen Dienste, die über eine Verbindung zeitgleich abgewickelt werden müssen, ist die Entwicklung einer neuen Übertragungstechnologie notwendig geworden. Der Vorteil eines neuen Netzes sollte in der Flexibilität der Übertragungsrate liegen und auch niedrigen Übertragungsraten offenstehen. Mit einer Übertragungskapazität von 140 MBit/s eignet sich das Breitband-ISDN für die Bildübertragung; z. B. für Videokonferenzen oder zur Übertragung von großen Datenmengen, wie sie zur Herstellung von Zeitschriften notwendig sind. Das ATM-Übertragungsverfahren ist in der B-ISDN-Technik vorteilhaft anwendbar für alle heute bekannten Dienste und bietet aufgrund seiner flexiblen Bitrate eine große Systemoffenheit für zukünftige Dienste.

Als Erweiterung des bisherigen ISDN (Integrated Service Digital Network) wird zukünftig das B-ISDN eingeführt. Wesentlicher Unterschied zum ISDN und SONET (Synchrones optisches Netz) ist ein asynchroner Übertragungsmodus.

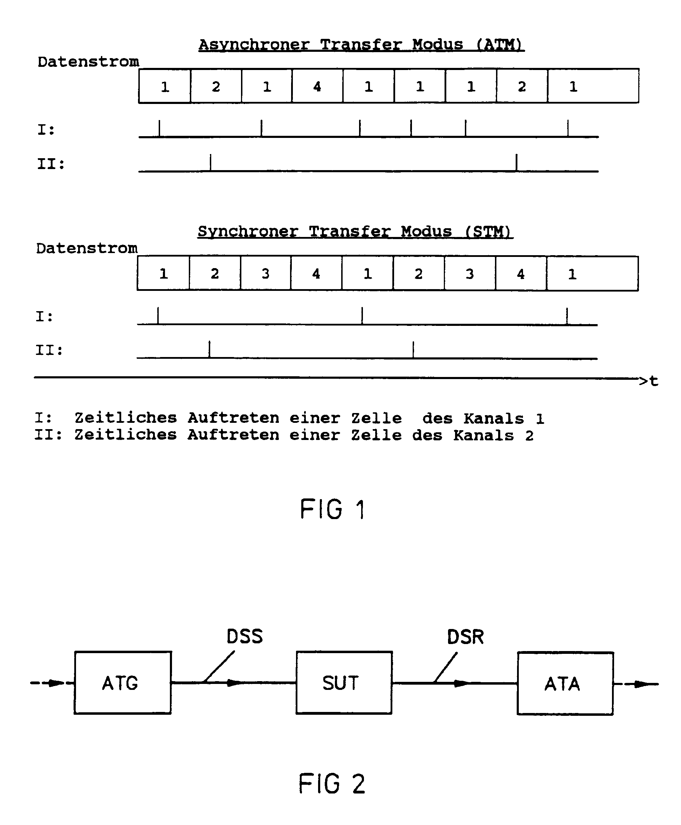

Figur 1 zeigt ein unregelmäßiges Auftreten von Zellen der Datenströme 1,2,3,4 beim Asynchronen Transfer Modus ATM des B-ISDN im Unterschied zum regelmäßigen zeitlichen Auftreten beim Synchronen Transfer Modus. Von besonderer Bedeutung ist, daß - im Unterschied zu dem Synchronen Transfer Modus (STM) - einem Übertragungskanal nicht ein bestimmter Zeitschlitz zugeordnet ist. Beim Asynchronen Transfer Modus ist die Reihenfolge der Zellen, die dem jeweiligen Kanal 1,2,3,4 usw. zugeordnet sind, nicht vorgegeben.

Durch die Anordnung der Zellen (Häufigkeitsverteilung) lassen sich zur Erzielung einer vollen Ausnutzung der Kanalkapazität praktisch beliebige Bitraten im ATM-Modus für den Benutzer implementieren. Dieses Verfahren ist daher offen für künftige Entwicklungen der Übertragungsraten. Es lassen sich alle anfallenden Datenübertragungen (Telefon, Bewegtbildübertragung, Rechnervernetzung usw.) in einem Übertragungssystem integrieren.

Eine entsprechende Anordnung zur Durchführung des erfindungsgemäßen Verfahrens zeigt Figur 2. Eine im Hinblick auf Qualitätsparameter zu untersuchende Übertragungsstrecke SUT wird mittels eines ATM-Generators ATG gezielt mit einem als Meßsignal dienenden Datenstrom DSS stimuliert und ein empfangener Datenstrom DSR wird mittels eines ATM-Analysators ATA auf eventuelle Störeinflüsse seitens der Übertragungsstrecke SUT hin untersucht.

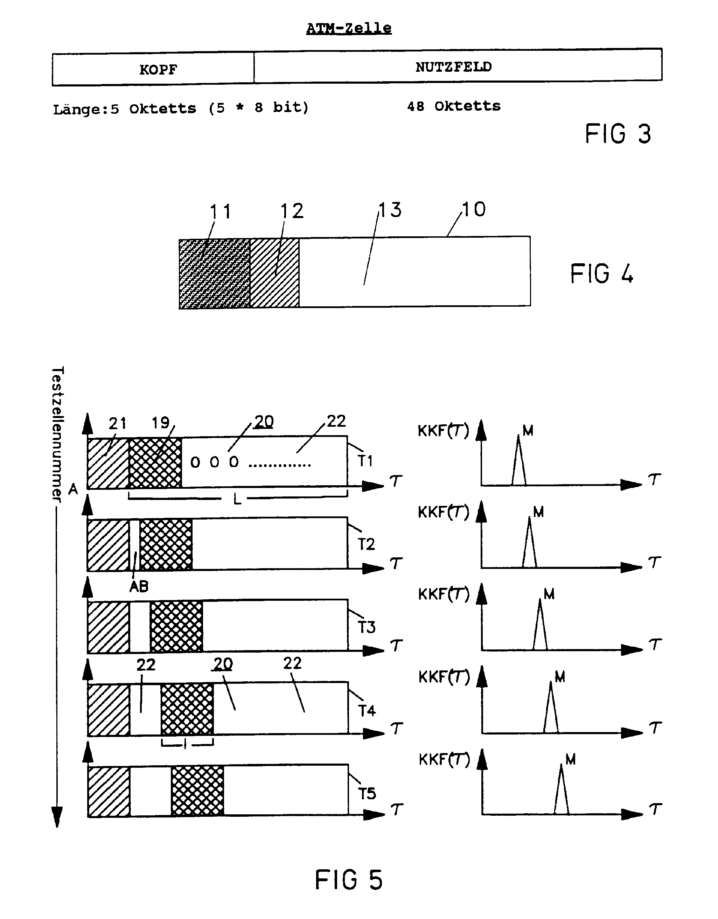

Aus einer Empfehlung der CCITT (Comité Consultatif International Télégraphique et Téléphonique) ist eine ATM-Zellstruktur, die nach Nutzfeld (Payload) und Kopf (Header) mit einer Länge von 48 bzw. 5 Oktetts (8 Bit-Wort) unterteilt ist, bekannt (Figur 3).

Wesentliche Informationen, die man der Testzelle entnehmen will, sind die Testzellennummer und die Bit-Fehler-Rate in dem Nutzfeld. Des weiteren ist es wichtig zu erkennen, ob es sich überhaupt um eine Testzelle handelt. Diese Informationen sind in den bisherigen Vorschlägen in separaten Datenfeldern im Nutzfeld enthalten (Testzellennummer, Bit-Fehler-Feld und Testzellenkennung).

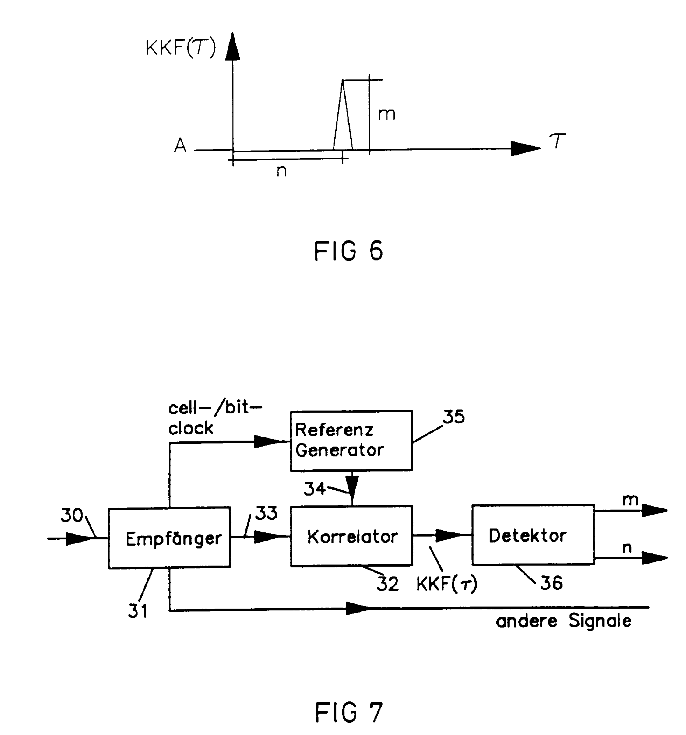

Wie Figur 4 zeigt kann man jede Testzelle 10 in einen Kopf 11, ein für interne Daten vewendetes Nutzfeld 12 (z. B. Testzellennummer, Testzellenkennung, Zeitstempel) und ein für eine Bit-Fehlermessung verfügbares Nutzfeld 13 unterteilen.

Der für die Bitfehlermessung verbleibende Platz in dem verfügbaren Nutzfeld 13 ist relativ gering. Ein Zweck der Erfindung ist es, möglichst viele Informationen der Testzelle in einem Signal zusammenzufassen, welches gleichzeitig die Bitfehlermessung ermöglicht. Dazu werden erfindungsgemäß die Daten für die Bitfehlermessung, die Testzellenkennung sowie die Testzellennummer zusammengefaßt.

Der ATM-Generator ATG (Figur 2) produziert eine Folge von Testzellen T1,T2,T3,T4,T5, deren für die Bit-Fehler-Messung verfügbares Nutzfeld mit einem Testmuster beschrieben wird, welches die Eigenschaft besitzt, daß seine Autokorrelationsfunktion AKF idealerweise ein Dirac-Impuls ist. M-se-quencen, pseudozufällige Zahlenfolgen und der Barker Code erfüllen z. B. diese Bedinung hinreichend.

Figur 5 zeigt weiter den zu einem Feld 21 zusammengefaßten Kopf 11 und das für interne Daten verwendete Nutzfeld 12 (vgl. Figur 4). Die Länge 1 eines Testmusters ist kürzer als die Länge L des verfügbaren Nutzfeldes 20. Dieses ermöglicht, daß die Lage des Testmusters von Testzelle zu Testzelle vorzugsweise jeweils um einen gleichen Abstand AB, insbesondere um ein bit nach rechts (oder nach links), versetzt wird, bis das Muster das gesamte verfügbare Nutzfeld 20 überstrichen hat; dies wird dann ggf. zyklisch wiederholt. Der nicht mit dem Testmuster 19 beschriebene Bereich 22 des verfügbaren Nutzfeldes 20 wird entweder nur mit dem Binärwert "1" oder nur mit dem Binärwert "0" belegt.

Der ATM-Analysator ATA (Figur 2) bildet nun über jede empfangene Zelle die Kreuzkorrelationsfunktion KKF mit einem erzeugten oder zugeführten Referenzmuster, das einen bekannten Phasenbezug zum Anfang der Zellen hat. Man erhält für das verfügbare Nutzfeld 20 ein Maximum M, welches in seiner Lage in Abhängigkeit von der aktuellen Testzellennummer variiert.

Die erhaltende Kreuzkorrelationsfunktion KKF für den Bereich des verfügbaren Nutzfeldes wird gemäß Figur 6 ausgewertet. Die Höhe m des Maximums der erhaltenen Kreuzkorrelationsfunktion KKF bestimmt die Ähnlichkeit des empfangenen Testmusters mit dem Referenzmuster und ermöglicht damit eine Erkennung der Testzelle sowie eine Aussage über die Bit-Fehler-Rate. Die relative Lage n des Maximums der Kreuzkorrelationsfunktion KKF zum Anfang A der jeweiligen Zelle bestimmt die Testzellennummer.

Das erfindungsgemäße Verfahren hat folgende wesentliche Vorteile:
Größtmöglicher Testbereich zur Bit-Fehler-Raten-Messung in dem verfügbaren Nutzfeld; die Bit-Fehler-Rate ist bestimmt durch Höhe m des Maximums. Es ist zur Mustererkennung keine Synchronisierung auf das ausgesendete Testmuster notwendig. Die Erkennung der Testzelle erfolgt über die Keuzkorrelationsfunktion KKF des Testmusters (keine zusätzlichen Daten notwendig). Die Testzellennummer ist durch die Lage n des Maximums der Kreuzkorrelationsfunktion KKF bestimmt; es werden keine gesonderten Daten hierfür benötigt. Durch die variable Position des Testmusters wird die Erkennung systematischer Bit-Fehler möglich.

Der Signalfluß für den ATM-Analysator ATA ist Figur 7 zu entnehmen. Eine empfangene Zelle 30 wird von einem Empfänger 31 einem Korrelatior 32 zugeführt, welcher das verfügbare Nutzfeld 33, in dem sich das Testmuster befindet, mit einem zell- und bit-synchronem Referenzmuster 34 (oder mit dem binär invertierten Referenzmuster) aus einem Referenz-Generator 35 korreliert.

Die im allgemeinen unipolaren, digitalen Signale der Zelle 30 sowie des digitalen Referenz Generators 35 werden durch Addition einer Offsetgröße in bipolare Signale umgeformt, da die bekannten Testmuster, deren Autokorrelationsfunktion AKF ein einzelner Impuls ist, in der Regel bipolare Signale sind. Wird dieses nicht beachtet, geht die Eindeutigkeit der Amplitude der Kreuzkorrelationsfunktion KKF für die Ähnlichkeitsbetrachtung verloren.

Ein Detektor 36 bestimmt aus der so erhaltenden Kreuzkorrelationsfunktion KKF Höhe m und Lage n des Maximums M. Hieraus lassen sich wie oben ausgeführt die Testzellennummer, die Testzellenkennung sowie die Bit-Fehler-Rate bestimmen.

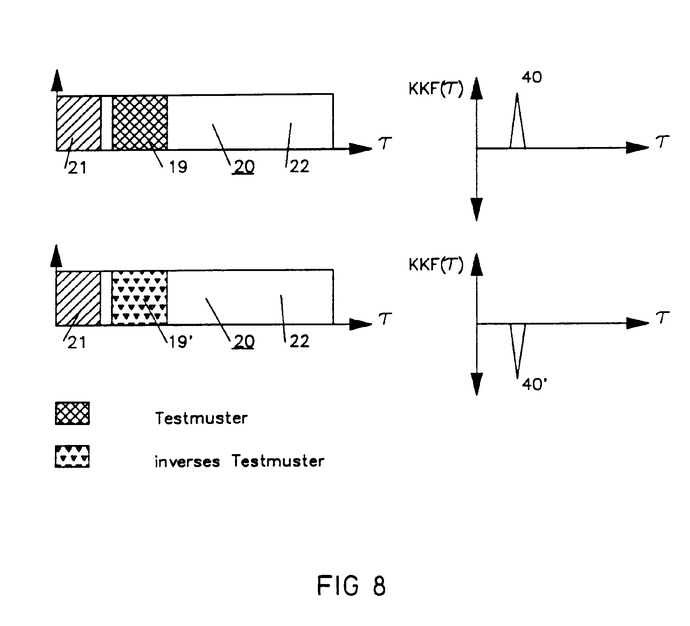

Eine Verdopplung des Umfanges der zur Verfügung stehenden Testzellennummern läßt sich dadurch erreichen, daß der ATM-Generator ATG einmal das Testmuster 19 und einmal das inverse Testmuster 19′ (d. h. die Binärwerte "1" bzw. "0" des Testmusters 19 sind in die Binärwerte "0" bzw. "1" des inversen Testmusters 19′ konvertiert) aussendet. Die Kreuzkorrelationsfunktion KKF weist dann abhängig davon, ob das ausgesendete Testmuster invertiert ist oder nicht, idealerweise ein positives 40 oder ein negatives 40′ Maximum auf, wie es Figur 8 zu entnehmen ist.

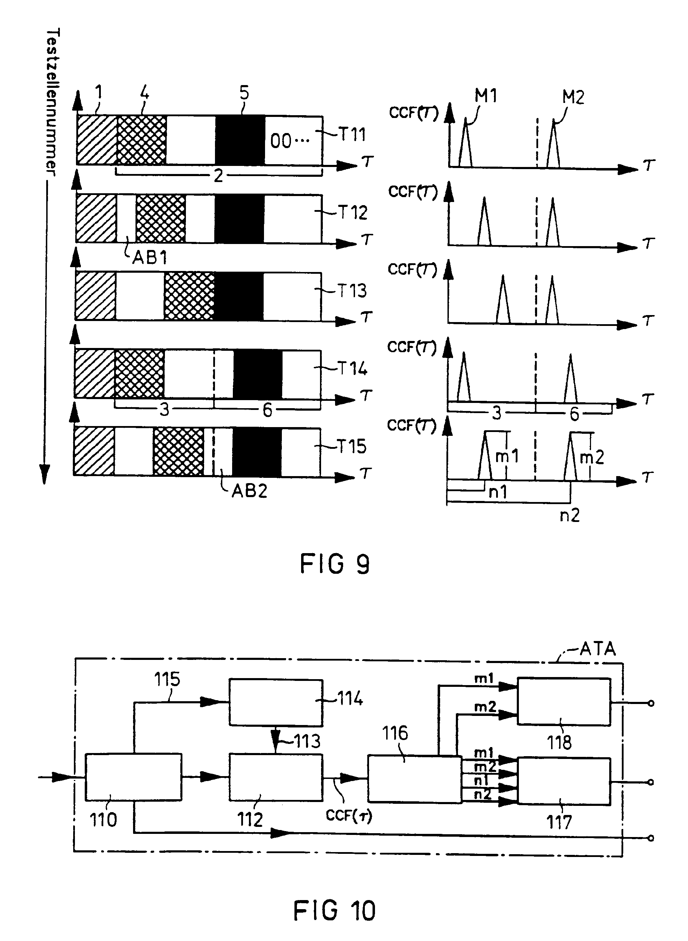

Bei einer anderen Ausführungsform des erfindungsgemäßen Verfahrens erzeugt der ATM-Generator ATG gemäß Figur 2 als Meßsignal eine Folge von Testzellen T11, T12, T13, T14 und T15, wie sie ausschnittsweise in Figur 9 gezeigt sind. Jede Testzelle besteht aus einem Kopf 1 und einem Nutzfeld 2; Kopf und Nutzfeld haben beispielsweise eine Länge von 5 bzw. 48 Oktetts (8 Bit-Wort). Jede der Testzellen T11 bis T15 ist in einem ersten Teil 3 ihres Nutzfeldes 2 mit einem ersten Testmuster 4 beschrieben, welches die Eigenschaft besitzt, daß seine Autokorrelationsfunktion idealerweise ein Dirac-Impuls ist. Testmuster mit derartigen Eigenschaften sind M-Sequenzen, pseudozufällige Zahlenfolgen oder beispielsweise der Barker-Code.

Wie der Figur 9 ferner zu entnehmen ist, ist jedes Testmuster 4 kürzer als der eine Teil 3 des Nutzfeldes der jeweiligen Testzellen. Dadurch ist es möglich, die Lage des einen Testmusters 4 von Testzelle zu Testzelle vorzugsweise jeweils um einen gleichen Abstand AB1, insbesondere um ein Bit nach rechts (oder nach links) versetzt anzuordnen, bis das eine Testmuster 4 den gesamten verfügbaren Teil 3 des Nutzfeldes 2 überstrichen hat. Bis dahin stimmt diese Ausführungsform des erfindungsgemäßen Verfahrens mit dem nach den Figuren 5 bis 7 überein.

In Abweichung von dem weiter vorn beschriebenen Verfahren ist hier jede Testzelle noch durch ein weiteres Testmuster 5 ergänzt, das in einen weiteren Teil 6 des Nutzfeldes 2 eingeschrieben ist. Diese weitere Testmuster 5 behält in den Testzellen T11 bis T13 eine feste Lage bei. Der nicht mit dem Testmuster 4 und 5 beschriebene Bereich 7 des Nutzfeldes 2 wird entweder mit dem Binärwert "1" oder mit dem Binärwert "0" belegt.

Der ATM-Analysator ATA gemäß Figur 2 bildet nun für jede empfangene Zelle T11 bis T13 getrennt für die Teile 3 und 6 des Nutzfeldes 2 jeweils die Kreuzkorrelationsfunktion mit einem erzeugten oder zugeführten Referenzmuster, das einen bekannten Bezug zum Anfang der Zellen hat. Man erhält dann - wie der rechte Teil der Figur 2 zeigt - für jeden Teil 3 bzw. 6 des Nutzfeldes 2 jeweils einen Maximalwert M1 bzw. M2, der in seiner Lage in Abhängigkeit von der aktuellen Testzellennummer variiert. Die gemeinsame Berücksichtigung der Lage der beiden Maxima in den Teilen 3 und 6 jedes Nutzfeldes 2 ergibt eine eindeutige Aussage über die Testzellennummer.

Nachdem entsprechend dem dargestellten Beispiel nach Figur 9 mit der Testzelle T13 eine wiederholungsfreie Variation der Lage des einen Testmusters 4 in dem einen Teil 3 des Nutzfeldes 2 nicht mehr möglich ist, wird zur Kennzeichnung der weiteren Testzellen T14 und T15 das weitere Testmuster 5 in dem weiteren Teil 6 des Nutzfeldes 2 in seiner Lage um einen Abstand AB2, vorzugsweise ein Bit, verändert und gleichzeitig das Testmuster 4 in dem einen Teil 3 des Nutzfeldes 2 in seine Ausgangslage gebracht. Unter Beibehaltung der Lage des weiteren Testmusters 5 läßt sich dann durch Variation der Lage des einen Testmusters 4 in dem einen Teil 3 des Nutzfeldes 2 eine weitere Anzahl von Testzellen im Meßsignal kennzeichnen. Die durch Kreuzkorrelation sich ergebenden Maxima mit ihrer unterschiedlichen Lage sind wiederum im rechten Teil der Figur 2 wiedergegeben.

Die Kreuzkorrelation mit der Gewinnung der Maxima M1 und M2 erfolgt in einem ATM-Analysator ATA, der den in Figur 10 gezeigten Aufbau aufweisen kann. Der Analysator ATA enthält eingangsseitig einen Empfänger 110, dem das über die zu untersuchende Übertragungsstrecke SUT geführte Meßsignal in Form von Testzellen T11 ... T15 zugeführt wird. Dem Empfänger 110 ist ein Korrelator 112 nachgeordnet, der das Nutzfeld jeder empfangenen Testzelle des Meßsignals mit einem zell- und bit-synchronem Referenzmuster 113 korreliert, das von einem Referenzgenerator 114 erzeugt wird. Die Synchronisation erfolgt über eine Verbindung 115 vom Empfänger 110 aus.

Von dem Korrelator 112 wird an einen nachgeordneten Detektor 116 ein Signal CCF(T) abgegeben, das der Kreuzkorrelationsfunktion entspricht. Der Detektor 116 bestimmt aus dem ihm zugeführten Signal die Höhe m1 und Lage n1 des Maximums M1 entsprechend dem einen Testmuster 4 in einem Teil 3 des Nutzfeldes 2 der jeweiligen Testzelle und die Höhe m2 und die Lage n2 des Maximums M2 entsprechend dem weiteren Testmuster 5 im weiteren Teil 6 des Nutzfeldes 2 der jeweils empfangenen Testzelle. Daraus wird in einer nachgeordneten Auswerteschaltung 117 die Testzellennummer der jeweils empfangenen Testzelle des Meßsignals ermittelt. Außerdem ist an den Detektor 116 eine weitere Auswerteschaltung 118 angeschlossen, die aus der Höhe m1 und m2 der Maxima M1 und M2 den Bitfehler errechnet.

Eine zusätzliche Verdopplung des Umfangs der zur Verfügung stehenden Testzellennummern läßt sich dadurch erreichen, daß der ATM-Generator ATG einmal das weitere Testmuster 5 und einmal das dazu inverse Testmuster aussendet. Die Kreuzkorrelationsfunktion weist dann abhängig davon, ob das ausgesendete weitere Testmuster 5 invertiert ist oder nicht, idealerweise ein positives oder ein negatives Maximum auf.

## Patentansprüche

1. Verfahren zum Ermitteln von Qualitätsparametern einer Übertragungsstrecke für digitale Datenströme mit Zellenstruktur, wobei jede Zelle ein frei mit Daten belegbares Nutzfeld aufweist, bei dem ein Meßsignal auf die Übertragungsstrecke gegeben und nach Durchlaufen der Übertragungsstrecke ausgewertet wird,
**dadurch gekennzeichnet**, daß
- als Meßsignal (DSS) eine Folge von Testzellen (T1,T2,T3,T4,T5) verwendet wird, deren Nutzfelder (20) jeweils teilweise mit einem aus einer Anzahl von Binärdaten (Bits) bestehenden Testmuster (19) belegt sind, wobei die Auto-Korrelationsfunktion des Testmusters (19) annähernd einem Dirac-Impuls entspricht und wobei
innerhalb der Folge der Testzellen (T1,T2,T3,T4,T5) die Lage des Testmusters (19) in den Nutzfeldern (20) der Testzellen (T1,T2,T3,T4,T5) wiederholungsfrei variiert ist,
- daß jede Zelle des Datenstroms (1) nach Durchlaufen der Übertragungsstrecke (SUT) mit einem mit dem Testmuster (19) identischen (34) oder zu dem Testmuster (19) inversen Referenzmuster korreliert wird
- und daß das Maximum (M) der erhaltenen Kreuzkorrelationsfunktion bezüglich seiner Lage (n) in bezug auf den Anfang (A) der jeweiligen Zelle und bezüglich seiner Höhe (n) ausgewertet wird.

2. Verfahren nach Anspruch 1,
**dadurch gekennzeichnet**, daß
der jeweils übrige Bereich (22) der Nutzfelder (20) der Testzellen (T1,T2,T3,T4,T5) mit identischen Binärwerten belegt wird (Fig. 6).

3. Verfahren nach Anspruch 1 oder 2,
**dadurch gekennzeichnet**, daß
die Lage der Testmuster (19) in aufeinanderfolgenden Testzellen (T1,T2,T3,T4,T5) um jeweils einen gleichen Abstand (AB) wiederholungsfrei variiert.

4. Verfahren nach einem der vorangehenden Ansprüche,
**dadurch gekennzeichnet**, daß
das Meßsignal (DSS) durch weitere Testzellen ergänzt wird, deren Nutzfelder (20) jeweils teilweise mit einem zu dem Testmuster (19) inversen Testmuster (19′) belegt sind.

5. Verfahren nach einem der vorangehenden Ansprüche,
**dadurch gekennzeichnet**, daß
- die Testzellen (T11, T12, T13, T14, T15) außer dem jeweils in einem Teil (3) ihrer Nutzfelder (2) vorgesehenen Testmuster (4) in einem weiteren Teil (6) ihrer Nutzfelder (2) mit einem aus einer Anzahl von Binärdaten (Bits) bestehenden weiteren Testmuster (5) belegt werden, wobei die Autokorrelationsfunktion des weiteren Testmusters (5) annähernd einem Dirac-Impuls entspricht,
- innerhalb der Folge der Testzellen (T11, T12, T13, T14, T15) die Lage des weiteren Testmusters (5) im weiteren Teil (6) der Nutzfelder (2) der Testzellen (T11, T12, T13, T14, T15) verändert wird, wenn die wiederholungsfreie Variation der Lage des einen Testmusters (4) in dem einen Teil (3) der Nutzfelder (2) in der Folge der Testzellen (T11, T12, T13, T14, T15) erschöpft ist,
- jede Zelle des Datenstroms nach Durchlaufen der Übertragungsstrecke (SUT) mit einem mit dem weiteren Testmuster (5) identischen oder zu dem weiteren Testmuster (5) inversen Referenzmuster korreliert wird und
- das Maximum (M2) der erhaltenden Kreuzkorrelationsfunktion bezüglich seiner Lage (n2) in Bezug auf den Anfang (A) der jeweiligen Zelle und bezüglich seiner Höhe (m2) ausgewertet wird.

6. Verfahren nach Anspruch 5,
**dadurch gekennzeichnet**,
- daß die Lage des weiteren Testmusters (5) nach jeweils einer Erschöpfung der wiederholungsfreien Variation der Lage des einen Testmusters (4) in dem einen Teil (3) der Nutzfelder (2) in der Folge der Testzellen (T11, T12, T13, T14, T15) um jeweils einen gleichen Abstand (AB2) wiederholungsfrei variiert wird.

7. Verfahren nach Anspruch 5 oder 6,
**dadurch gekennzeichnet**,
daß das Meßsignal (DSS) durch weitere Testzellen ergänzt wird, die in dem weiteren Teil (6) ihrer Nutzfelder (2) jeweils teilweise mit einem zu dem weiteren Testmuster (5) inversen Testmuster belegt sind.

## Claims

1. Process for determining quality parameters of a transmission path for digital data streams having a cellular structure, each cell having a payload which is freely assignable with data, in which process a test signal is sent on the transmission path and is evaluated after passing through the transmission path, characterised in that
- as the test signal (DSS) a sequence of test cells (T1, T2, T3, T4, T5) is used, each of whose payloads (20) is partially occupied by a test pattern (19) consisting of a number of binary data (bits), whereby the auto-correlation function of the test pattern (19) more or less corresponds to a Dirac pulse and whereby the position of the test pattern (19) in the payloads (20) of the test cells (T1, T2, T3, T4, T5) is varied without repetition within the sequence of test cells (T1, T2, T3, T4, T5),
- that after passing through the transmission path (SUT), each cell of the data stream (1) is correlated with a reference pattern that is identical to (34) or is the inverse of the test pattern (19),
- and that the maximum (M) of the resulting cross-correlation function is evaluated with regard to its position (n) in relation to the start (A) of the respective cell and with regard to its amplitude (m).

2. Process according to Claim 1, characterised in that the respective remaining area (22) of the payloads (20) of the test cells (T1, T2, T3, T4, T5) is occupied by identical binary values (Fig. 6).

3. Process according to Claim 1 or 2, characterised in that the position of the test patterns (19) in successive test cells (T1, T2, T3, T4, T5) is varied non-repetitively by the same distance (AB) in each case.

4. Process according to one of the preceding Claims, characterised in that the test signal (DSS) is supplemented by further test cells, each of whose payloads (20) is partially occupied by a test pattern (19′) that is the inverse of the test pattern (19).

5. Process according to one of the preceding Claims, characterised in that
- apart from the test pattern (4) provided in one part (3) of their payloads (2), in a further part (6) of their payloads (2) the test cells (T11, T12, T13, T14, T15) are occupied by an additional test pattern (5) consisting of a number of binary data (bits), the auto-correlation of the additional test pattern (5) more or less corresponding to a Dirac pulse,
- within the sequence of test cells (T11, T12, T13, T14, T15) the position of the additional test pattern (5) varies in the further part (6) of the payloads (2) of the test cells (T11, T12, T13, T14, T15) when the non-repetitive variation of the position of the one test pattern (4) is exhausted in the one part (3) of the payloads (2) in the sequence of test cells (T11, T12, T13, T14, T15),
- after passing through the transmission path (SUT) each cell of the data stream is correlated with a reference pattern that is identical to the additional test pattern (5) or is the inverse of the additional test pattern (5), and
- the maximum (M2) of the received cross-correlation function is evaluated with regard to its position (n2) in relation to the start (A) of the respective cell and with regard to its amplitude (m2).

6. Process according to Claim 5, characterised in that
- the position of the additional test pattern (5) is varied without repetition by an equal distance (AB2) in each case, after exhausting the non-repetitive variation of the position of the one test pattern (4) in the one part (3) of the payloads (2) in the sequence of test cells (T11, T12, T13, T14, T15).

7. Process according to Claim 5 or 6, characterised in that the test signal (DSS) is supplemented by further test cells that are partially occupied in the further part (6) of their payloads (2) by a test pattern that is the inverse of the additional test pattern (5).

## Revendications

1. Procédé pour déterminer des paramètres de qualité d'une voie de transmission pour des flux de données numériques à structure cellulaire, chaque cellule comprenant un champ utile pouvant être occupé de façon libre par des données, et dans lequel on fournit un signal de mesure sur la voie de transmission et on l'exploite après passage dans la voie de transmission,
caractérisé en ce que
- on utilise comme signal (DSS) de mesure un train de cellules (T1,T2,T3,T4,T5) de test, dont les champs (20) utiles sont chacun occupés en partie par un motif (19) de test formé de plusieurs données binaires (bits), la fonction d'autocorrélation du motif (19) de test correspondant approximativement à une impulsion de Dirac et
- la position du motif (19) de test dans les champs (20) utiles des cellules (T1,T2,T3,T4,T5) de test variant sans répétition dans le train de cellules (T1,T2,T3,T4,T5) de test,
- après passage dans la voie (SUT) de transmission, on effectue la corrélation de chaque cellule du flux (1) de données avec un motif (34) de référence identique au motif (19) de test ou inverse du motif (19) de test et
- on exploite la position (n) par rapport au début (A) de la cellule respective et l'amplitude (m) du maximum (M) de la fonction d'intercorrélation obtenue.

2. Procédé suivant la revendication 1,
caractérisé en ce que la zone restante (22) des champs (20) utiles des cellules (T1,T2,T3,T4,T5) de test est occupée par des valeurs binaires identiques (figure 6).

3. Procédé suivant la revendication 1 ou 2,
caractérisé en ce que la position des motifs (19) de test varie d'une cellule de test (T1,T2,T3,T4,T5) à l'autre d'un même intervalle (AB) sans répétition.

4. Procédé suivant l'une des revendications précédentes, caractérisé en ce que le signal (DSS) de mesure est complété par d'autres cellules de test, dont les champs (20) utiles sont occupés respectivement partiellement par un motif (19′) de test inverse du motif (19) de test.

5. Procédé suivant l'une des revendications précédentes,
caractérisé en ce que
- on occupe une autre partie (6) des champs (2) utiles des cellules (T11,T12,T13,T14,T15) de test située en dehors du motif de test prévu dans une partie (3) de leurs champs (2) utiles, par un autre motif (5) de test formé de plusieurs données binaires (bit), la fonction d'autocorrélation de l'autre motif (5) de test correspondant approximativement à une impulsion de Dirac,
- dans le train de cellules (T11,T12,T13,T14,T15) de test, on modifie la position de l'autre motif (5) de test se trouvant dans l'autre partie (6) des champs (2) utiles des cellules (T11,T12,T13,T14,T15) de test, lorsqu'il n'est plus possible de faire varier sans répétition la position de l'un des motifs (4) de test dans l'une des parties (3) des champs (2) utiles dans le train des cellules (T11, T12,T13,T14,T15) de test,
- après passage dans la voie (SUT) de transmission, on effectue la corrélation de chaque cellule du flux de données avec un motif de référence identique à l'autre motif (5) de test ou inverse de l'autre motif (5) de test et
- on exploite la position (n2) par rapport au début (A) de la cellule considérée et l'amplitude (m2) du maximum (M2) de la fonction d'intercorrélation obtenue.

6. Procédé suivant la revendication 5,
caractérisé en ce que
- lorsqu'il n'est plus possible de faire varier sans répétition la position de l'un des motifs (4) de test dans l'une des parties (3) des champs (2) utiles dans le train des cellules (T11,T12,T13,T14,T15) de test, on fait varier sans répétition la position de l'autre motif (5) de test, d'un même intervalle (AB2).

7. Procédé suivant la revendication 5 ou 6,
caractérisé en ce que
on complète le signal (DSS) de mesure par d'autres cellules de test, dont l'autre partie (6) de champ (2) utile est occupée respectivement en partie par un motif de test inverse de l'autre motif (5) de test.
